(19) Europäisches Patentamt
European Patent Office
Office européen des brevets

(11) **EP 2 143 243 B1**

(12) **EUROPEAN PATENT SPECIFICATION**

(45) Date of publication and mention
of the grant of the patent:
**02.08.2017 Bulletin 2017/31**

(51) Int Cl.:
**H04L 27/26** $^{(2006.01)}$

(21) Application number: **08737897.2**

(86) International application number:
**PCT/IB2008/051476**

(22) Date of filing: **17.04.2008**

(87) International publication number:
**WO 2008/129476 (30.10.2008 Gazette 2008/44)**

(54) **PILOT ALLOCATION IN SINGLE FREQUENCY NETWORK**

PILOTZUWEISUNG IN EINEM MONOFREQUENZNETZ

ATTRIBUTION DE PILOTE DANS UN RÉSEAU À FRÉQUENCE UNIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **24.04.2007 EP 07106770
04.06.2007 EP 07109509**

(43) Date of publication of application:
**13.01.2010 Bulletin 2010/02**

(73) Proprietor: **TP Vision Holding B.V.
1097 JB Amsterdam (NL)**

(72) Inventors:
• **FILIPPI, Alessio
NL-5656 AE Eindhoven (NL)**
• **SERBETLI, Semih
NL-5656 AE Eindhoven (NL)**
• **VAN VOORTHUISEN, Paul, H., J., M.
NL-5656 AE Eindhoven (NL)**

(74) Representative: **DREISS Patentanwälte PartG
mbB
Postfach 10 37 62
70032 Stuttgart (DE)**

(56) References cited:
EP-A- 1 233 566     EP-A- 1 734 711
US-A1- 2004 184 399     US-A1- 2006 209 927
US-A1- 2006 209 973     US-A1- 2006 291 577

**Description**

FIELD OF THE INVENTION

The present invention relates to a single frequency network comprising a plurality of transmitters in a transmission area for simultaneously transmitting a transmission signal carrying the same transmission data using the same frequency channel for reception by one or more receivers located in said transmission area.

BACKGROUND OF THE INVENTION

US 2004/184399 discloses a method for estimating channels of an OFDM signal. The method comprises the steps of deriving responses of pilot channels, deriving responses of first data channels by time and frequency domain combined linear interpolation among the responses of the pilot channels, deriving each response of boundary channels by frequency domain linear interpolation between the responses of the nearest pilot and first data channels, and deriving responses of second data channels by frequency domain extrapolation using the responses of the pilot and first data channels.

US 2006/291577 discloses a system and method for selecting pilot tone positions in a communication system. In one embodiment, the communication system includes a first base station configured to generate a first pattern of positions of pilot tones and a second base station configured to generate a second pattern of positions of pilot tones. The second pattern of positions of pilot tones is a nonuniform perturbation of an equispaced pattern of positions of pilot tones and is different from the first pattern of positions of pilot tones. The communication system also includes a mobile station configured to receive the first and second pattern of positions of pilot tones and identify one of the first and second base stations therefrom.

US 2006/209973 discloses a pilot signal transmission for an orthogonal frequency division wireless communication system. Transmission patterns for pilot symbols transmitted from a mobile station or base station are provided. The pattern allows for improved receipt of the pilot symbols transmitted. In addition, schemes for improving the ability to multiplex pilot symbols without interference and/or biasing from different mobile stations over the same frequencies and in the same time slots.

Single frequency networks (SFN) are networks of transmitters transmitting the same signal at the same frequency and at the same time. They are used in broadcast terrestrial standards such as, for instance, the DVB-T standard. They have the advantage of allowing a frequency reuse factor of one and the disadvantage of creating artificially long channels. The wireless channel seen by the receiver does not only consist of the propagation delay, but it is also influenced by the relative position of the transmitters with respect to the receiver. The DVB-T standard faces this challenging scenario by employing OFDM (Orthogonal Frequency Division Multiplex) modulation with a very long guard interval.

OFDM is known to be very robust with respect to delay spread at the cost of a loss in spectral efficiency (the additional guard interval). To give an idea, a propagation only scenario can be expected to generate a channel with a maximum delay spread of about 5-10 $\mu$s. In the presence of an SFN, the maximum expected delay spread is as high as about 224 $\mu$s, which corresponds to the longest guard interval defined by the DVB-T standard. In other words, in the presence of SFN, a channel about 22 times longer than in non-SFN network might be expected.

A long channel corresponds to a highly frequency selective channel. OFDM based receivers usually estimate the channel in the frequency domain by using their a-priori knowledge of pilots inserted in some sub-carriers. If the channel is very frequency selective, more pilot sub-carriers are needed to provide reliable channel estimation.

In a DVB-T system, each OFDM symbol has one pilot sub-carrier every 12 sub-carriers for channel estimation. The pilots are assigned to different sub-carriers depending on the OFDM symbol index. If the channel is static, the pilots are interpolated in time to obtain a denser pilot grid for each OFDM symbol with a pilot sub-carrier every three sub-carriers. This very dense pilot structure is really needed in the presence of the longest expected channel in an SFN.

US 7,145,959 B2 discloses a system and method for using a group of pilot signals to enhance a data signal within an OFDM multiple-access scheme. The OFDM multiple-access scheme has multiple OFDM transmitters using at least overlapping frequency spectrums, during at least overlapping time period, in at least overlapping geographic areas. A set of data signals and a set of pilot signals are received on antenna elements. Each group of data signals from the set of data signals is uniquely associated with a group of pilot signals from the set of pilot signals. Each pilot signal from the set of pilot signals is uniquely associated with its own code from a set of codes. Each code from the set of codes is uniquely associated with an OFDM transmitter from the multiple OFDM transmitters. A group of pilot signals from the set of pilot signals is identified based on its uniquely associated code. A weight value associated with each antenna element from a set of antenna elements is adjusted so that a level of correlation between the group of pilot signals and the code uniquely associated with the group of pilot signals is enhanced while a level of correlation between the remaining groups of pilot signals from the set of pilot signals and the codes uniquely associated with those remaining group of pilot signals are suppressed.

SUMMARY OF THE INVENTION

The presence of SFN generates very long channels, which require dense pilot structure to be estimated. The dense pilot structure leads to a spectral efficiency loss. It is an object of the present invention to provide a single frequency network that allows the receiver to estimate the propagation channels from each transmitter to itself independently without requiring a dense pilot structure.

The invention is defined by the independent claims. Preferred embodiments of the invention are defined in the dependent claims. It shall be understood that the subject matter of all independent claims have similar and/or identical preferred embodiments as defined in the dependent claims.

The proposed invention solves the above described disadvantage of dense pilot structure. Moreover, it is foreseen that in future terrestrial broadcast standards, e.g. DVB-T2, some forms of spatial diversity might be employed. For instance, the well known Alamouti scheme (as e.g. disclosed in WO 99/14871 or described in S.M. Alamouti "A simple transmit diversity technique for wireless communications", IEEE J. Sel. Areas. Comm. vol. 16, pp. 1451-1458, October 1998) or other forms of space time block codes might be adapted to the SFN scenario. In this case there will be the need of estimating the channels from each transmitter to the receiver and the present invention might provide a means to estimate them.

The present invention is based on the idea to assign orthogonal pilot sequences to transmitters located far away in space. By doing so the receiver can distinguish among the channels from each transmitter and itself. Therefore, instead of estimating a single very long channel, the receiver can estimate multiple short channels. This provides significant advantages such as always allowing the channel estimation within a single OFDM symbol or, equivalently, always having the required number of pilot sub-carriers per OFDM symbol.

It should be noted that there might be the case in which transmitters located close in space might use the same set of pilot data. The proposed method would then see the "cluster of transmitters" as a single transmitter. In this case, not all transmitter, but only the transmitter located far away and not being seen by a receiver as such a cluster of transmitters located close to each other use different pilot sequences.

Here, "close" means not more than approximately 7 to 10 km, e.g. not more than 9 km. For some systems, in particular those without scattered pilots "close" may alternatively mean not more than 1 to 2 km, e.g. not more than 1.5 km. These numbers come from the proposed pilot sequences which are designed to deal with channels as long as 10 to 40 $\mu$s (e.g. 9 respectively 1.5 km comes from 40 $\mu$s minus 10 $\mu$s respectively 5 $\mu$s plus 5 $\mu$s of propagation delay). Accordingly, "far away" may mean more than approximately 7 to 10 or, alternatively more than approximately 1 to 2 km, e.g. more than 9 or 1.5 km respectively.

By applying this idea to an SFN scenario, the proposed pilot structure has some advantages as compared to the current DVB-T pilot structure in terms of required overhead and mobility support.

According to the prior art the assigning of orthogonal codes for channel estimation to different transmit antenna or transmitters is done when different transmit signals are transmitted over the different antenna/transmitters. The reason being that only when different signals are transmitted it is required to estimate the different channels to recover the signal. According to the present invention in an SFN scenario, however, where the same signal is transmitted over multiple transmitters/antennas, there is no need to estimate the channels separately to recover the data. Thus, by the proposed pilot scheme that allows for estimating the channels separately, an improvement can be achieved in an SFN scenario where there can be high relative delays between channels from different transmitters to the same receiver.

BRIEF DESCRIPTION OF THE DRAWINGS

These and other aspects of the invention will be apparent from and elucidated with reference to the embodiment(s) described hereinafter. In the following drawings

Fig. 1 shows a general layout of a single frequency network,
Fig. 2 shows a diagram of a time-frequency plane showing the pilots used in DVB-T/H,
Fig. 3 shows a diagram of a time-frequency plane showing a part of the pilots called scatter pilots (SP) used according to an embodiment of the present invention,
Fig. 4 shows a diagram of a time-frequency plane showing a part of the pilots called continuous and adjacent pilots (CAP) used according to an embodiment of the present invention,
Fig. 5 shows a diagram of a time-frequency plane showing an overview of all the pilots (SP and CAP) used according to an embodiment of the present invention,
Fig. 6 shows an embodiment of a transmitter according to the present invention,
Fig. 7 shows an embodiment of a receiver according to the present invention,

Fig. 8 shows an embodiment of a pilot searching unit and a channel estimation unit of a receiver according to the present invention, and

Fig. 9 shows an example of an SFN channel made of two channels.

## DETAILED DESCRIPTION OF THE INVENTION

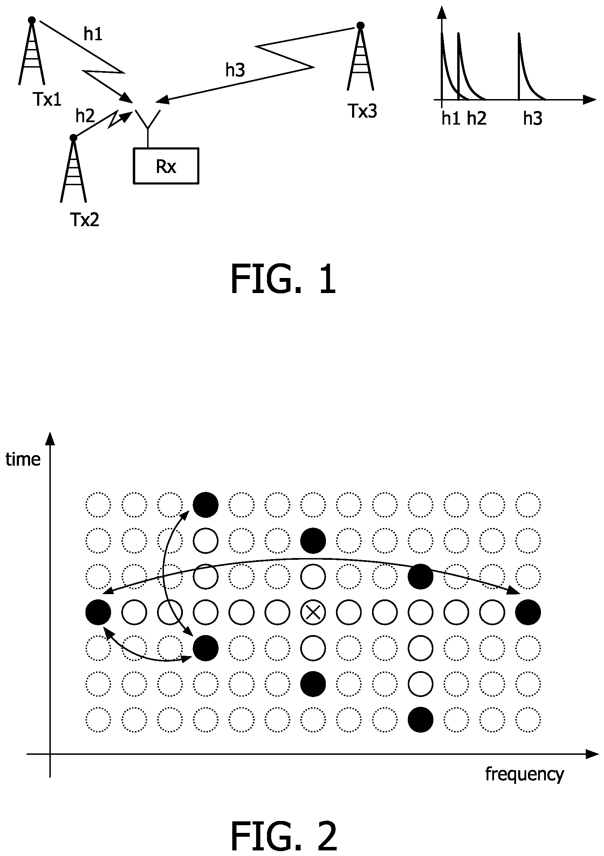

Fig. 1 illustrates the typical layout of a single frequency network having, in this embodiment, three transmitters Tx1, Tx2, Tx3 and one receiver Rx in the transmission area. All transmitters transmit the same signal at the same time using the same frequency. In an SFN the aggregate channel needs to be estimated.

In a DVB-T system, each OFDM symbol has one pilot sub-carrier every 12 sub-carriers for channel estimation. The pilots are assigned to different sub-carriers depending on the OFDM symbol index as depicted in Fig. 2 showing a diagram of a time-frequency plane showing the pilots used in DVB-T/H. The black dots indicate the pilot sub-carriers and the empty dots the data sub-carriers. If the channel is static, the pilots are interpolated in time to obtain a denser pilot grid for each OFDM symbol with a pilot sub-carrier every three sub-carriers. This very dense pilot structure is needed in the presence of the longest expected channel in an SFN.

A possible embodiment of the invention is the following proposed pilot scheme which might be suitable for future terrestrial broadcast standard (DVB-T2). To describe the embodiment, some known concepts shall first be recalled.

The proposed distributed pilots need to estimate the propagation channels seen by the OFDM receiver. This implies that the receiver needs to estimate the propagation channels with respect to the OFDM timing synchronization. We propose to design the distributed pilot sequence as two different sets of pilots. The distributed scatter pilots (SP) and the distributed continuous and adjacent pilot (CAP). The SP are designed to estimate each individual propagation channel as if it were perfectly synchronized to the OFDM timing synchronization. The CAP are designed to estimate the relative delay between each propagation channel and the OFDM timing synchronization. In the following we describe separately the design of the SP and of the CAP.

For the SP pilots, it shall be assumed that the wireless channel from each transmitter to a receiver is a multipath channel with a maximum delay spread of $10\mu s$. The TU6 channel has a maximum delay spread of $5~\mu s$, so the assumption is somehow pessimistic. Moreover, in line-of-sight scenario the length of the channel is expected to be even less.

The coherence bandwidth of the channel Bc is proportional to the inverse of the length of the channel. It shall be defined here Bc=1/tau_max, with tau_max the maximum expected length of the channel. In theory, by inserting pilots in frequency domain as far as the coherence bandwidth of the channel, the complete channel frequency response can be derived through interpolation. In practice, the pilots need to be denser than the coherence bandwidth of the channel to allow for a simple interpolation scheme.

The current DVB-T standard assumes the maximum length of the channel to be equal to one fourth of the OFDM symbol duration T. This corresponds to a coherence bandwidth Bc=1/(T/4)=4/T. Since in OFDM modulation the OFDM symbol duration T is the inverse of the sub-carrier spacing F, the coherence bandwidth corresponds to 4 sub-carriers. In theory, 1 pilot every 4 sub-carriers could be provided to estimate the full channel frequency response. In DVB-T standard, after proper time interpolation, the pilot grid is as dense as 1 pilot every 3 sub-carriers. The pilot density has been increased by 4/3 with respect to the lower theoretical limit to ease the frequency interpolation. With a channel as long as $10~\mu s$, the maximum channel length as a function of the OFDM symbol duration T is T/4/22.4 since T/4=224 $\mu s$ in the 8K scenario. Following the same reasoning and increasing the minimum pilot density by 4/3, a pilot grid as dense as 1 pilot every 67 sub-carriers can be obtained. Since a pilot spacing which is a power of 2 is desired to give extra flexibility to the proposed scheme, it is proposed according to a preferred embodiment to insert a pilot sub-carrier every 64 sub-carriers.

The size of an SFN can vary significantly. It is assumed that an SFN with the maximum distance among transmitters of a value in a range between 50 and 100 km, e.g. 70 km, can include a maximum number of eight transmitters. This is a reasonable assumption to the inventors' knowledge. With a different maximum number of transmitters, similar embodiments can be derived. The 70 km case is the largest SFN size foreseen by the current standard which can deal with a maximum delay spread of the SFN channel of $224~\mu s$ approximately equal to 70 km/c, where c is the speed of light.

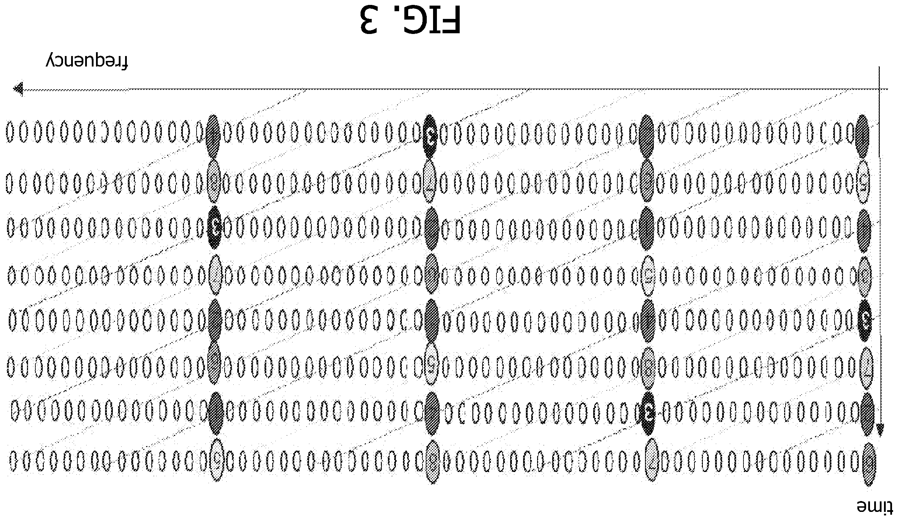

According to a preferred embodiment it is proposed to assign to each of these eight transmitters in an SFN a distinct SP sequence in a mode depicted in Fig. 3. Each circle represents a sub-carrier of an OFDM symbol. The empty circles correspond to data sub-carriers. The colored circles correspond to the pilot sub-carriers. Each transmitter transmits its own SP sequence and nothing on the sub-carriers assigned to the SP of the other transmitters within the same OFDM symbol. The odd OFDM symbols contain the SP of four transmitters, i.e. from Tx1 to Tx4. The even OFDM symbols contain the SP of the other four transmitters, i.e. Tx5 to Tx8. Each transmitter transmits its own SP sequence with a pilot every 64 sub-carriers and an empty sub-carrier every 16 sub-carriers, for an overall overhead of 1/16, i.e. 1 sub-carrier every 16 is not used for data.

With the proposed SP scheme, the receiver can estimate the individual propagation channel from each transmitter to itself separately in one OFDM symbol since the 64 sub-carrier spacing is expected to be enough to deal with a channel as long as 10 $\mu$s. We notice that the SP assigned to each transmitter change position depending on the OFDM symbol index $k$. This is done to make the distributed pilot scheme more robust with respect to unexpected longer propagation channels. If the channel does not vary too much, through time interpolation it is possible to estimate a single propagation channel as long as $40\mu$s. This means that in the presence of a static channel the same pilot sequence can be assigned to transmitters with a maximum separation of about 9 km, which ensures extra flexibility in the network planning. The SP estimate the individual propagation channels as if they were perfectly synchronized with respect to the OFDM symbol time synchronization. We will see now the design for the pilots needed for estimating the relative delay of each individual propagation channel.

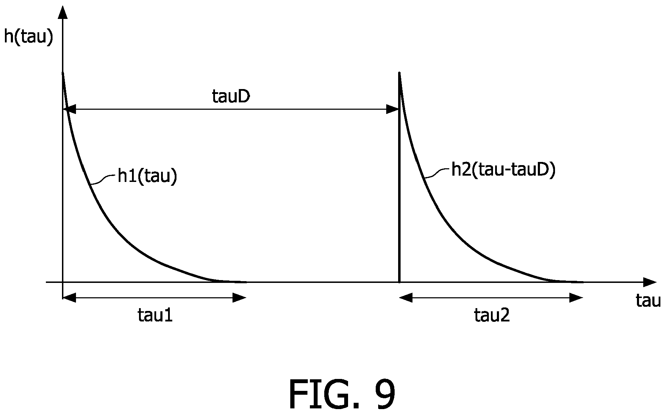

For the CAP, we recall that the signals coming from other transmitters arrive with an extra propagation delay tauD with respect to the OFDM timing synchronization as depicted in Fig. 9. A delay tauD implies a multiplication by an exponential factor of the channel frequency response. We now indicate with $H(i)\_\{n,k\}$ the channel frequency response on sub-carrier $n$ of the propagation channel of the transmitter $i$, and with tauD($i$) the correspondent relative delay, then we can write $H(i)\_\{n,k\} = H1(i)\_\{n,k\}\exp\{$-j$2\pi nF$ tauD($i$)$\}$, where $H1(i)\_\{n,k\}$ corresponds to the channel frequency response $H(i)\_\{n,k\}$ as if it were perfectly synchronized with respect to the OFDM timing synchronization. The SP are designed to estimate only $H1(i)\_\{n,k\}$ and they can not deal with the additional exponential factor introduced by tauD. The additional exponential factor exp $\{$-j$2\pi nF$ tauD($i$)$\}$, needs to be estimated. We also noticed that the period of the exponential factor is equal to 1/tauD($i$). Since tauD($i$) can be as long as the guard interval and the maximum length of the guard interval is $T/4$, the minimum period is equal to $4/T$ . To estimate tauD($i$), we need channel observations not spaced apart more than four sub-carriers. We propose to insert dedicated pilots to estimate the relative delays tauD($i$) and refer to this subset of pilots as continuous and adjacent pilots (CAP). We indicate with D the distance between different observations of the same channel frequency response, with CAP($i$)\_$\{k\}$ the set of continuous and adjacent pilot dedicated to transmitter $i$ in the OFDM symbol $k$ and used to estimate tauD($i$) and with $N$CAP the number of CAP dedicated to each transmitter. $N$CAP does not depend on the transmitter index $i$ because we assign the same number of CAP to all the transmitters. The estimate of tauD($i$) in the OFDM symbol $k$ can be derived as

$$\hat{\tau}_{\mathrm{D},k}^{(i)} = \frac{1}{2\pi DF}\mathrm{phase}\left(\frac{1}{N_{\mathrm{CAP}}}\sum_{n\in\mathrm{CAP}_k^{(i)}}\hat{H}_{n,k}^{(i)}\hat{H}_{n+D,k}^{(i)*}\right) \quad (1)$$

The quality of the estimate improves with the size of the set CAP($i$). The derived estimate uses a single OFDM symbol to estimate tauD($i$). The quality of this estimate can be improved by averaging the channel estimates over multiple OFDM symbols. Alternatively or additionally, there is also another and more robust way to estimate tauD($i$). It is possible to use the set of scattered pilots to estimate the fractional part of tauD($i$) as

$$\hat{\tau}_{\mathrm{D},k,\mathrm{frac}}^{(i)} = \frac{1}{2\pi D_{\mathrm{SP}}F}\mathrm{phase}\left(\frac{1}{N_{\mathrm{SP}}}\sum_{n\in\mathrm{SP}_k^{(i)}}\hat{H}_{n,k}^{(i)}\hat{H}_{n+D_{\mathrm{SP}},k}^{(i)*}\right) \quad (2)$$

Given the relative large number of available scatter pilot $N$SP and the large distance DSP the estimate of the fractional part will be very reliable and hence more robust. With the estimate of the fractional part of and the estimate of (1), we can estimate the integer part of tauD($i$) as

$$\hat{\tau}_{\mathrm{D},k,\mathrm{int}}^{(i)} = \frac{N}{D_{\mathrm{SP}}}\left[\frac{\hat{\tau}_{\mathrm{D},k}^{(i)} - \hat{\tau}_{\mathrm{D},k,\mathrm{frac}}^{(i)}}{N/D_{\mathrm{SP}}}\right] \quad (3)$$

where [·] indicates the closest integer and $N/D$SP is the period of the SP in time domain. The more reliable estimate of tauD is the sum of the integer and the fractional parts of (2) and (3).

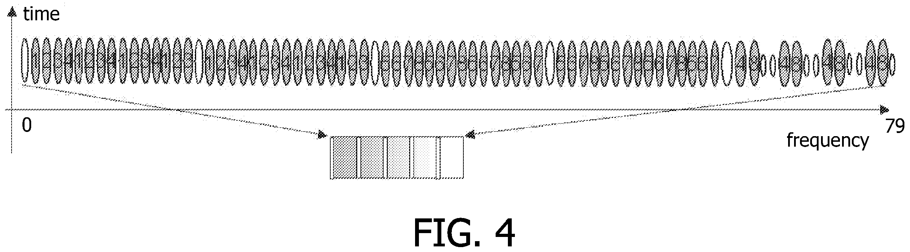

According to a preferred embodiment it is proposed to assign to each transmitter in an SFN a distinct CAP pilot sequence in a mode depicted in Fig. 4. Each circle represents a sub-carrier of an OFDM symbol. The empty circles correspond to data sub-carriers. The colored circles correspond to the pilot sub-carriers. Each transmitter transmits its own pilot sequence and nothing on the sub-carriers assigned to the other transmitters within the same OFDM symbol. Each transmitter continuously transmits a fixed set of pilots where the pilots are separated by four sub-carriers. This means that in the estimation of tauD($i$) as proposed in the previous equations we set $D$ = 4. We also notice that the pilots from different transmitters are interleaved. The CAP do not use the sub-carriers assigned to the SP in view of simplifying the channel estimation process at the border of the bandwidth. We design the CAP block to provide seven observations of the product $H(i)\_{n,k}\ H^*(i)\_{n+D,k}$ for each transmitter $i$. This creates some irregularity in the pilot structure, leaving a part of the sub-carriers not used. These empty sub-carriers might be used to transmit some additional pilot symbols, e.g. TPS information of DVB-T standard or data. There are three basic CAP blocks in one OFDM symbol. Two at the border of the spectrum and one in the middle which provide a reliable estimate of tauD($i$) in just one OFDM symbol. We also propose to increase the number of available sub-carriers in the DVB-T to make it a multiple of 64, i.e. $K_{max,2}$ +1= 6848. This implies that 30 empty sub-carriers as defined in DVB-T are now used to carry CAP. DVB-T defines 687 empty sub-carriers on each side of the band in the 8k mode. Using 15 of them to carry BPSK modulated pilots should not have detrimental consequences.

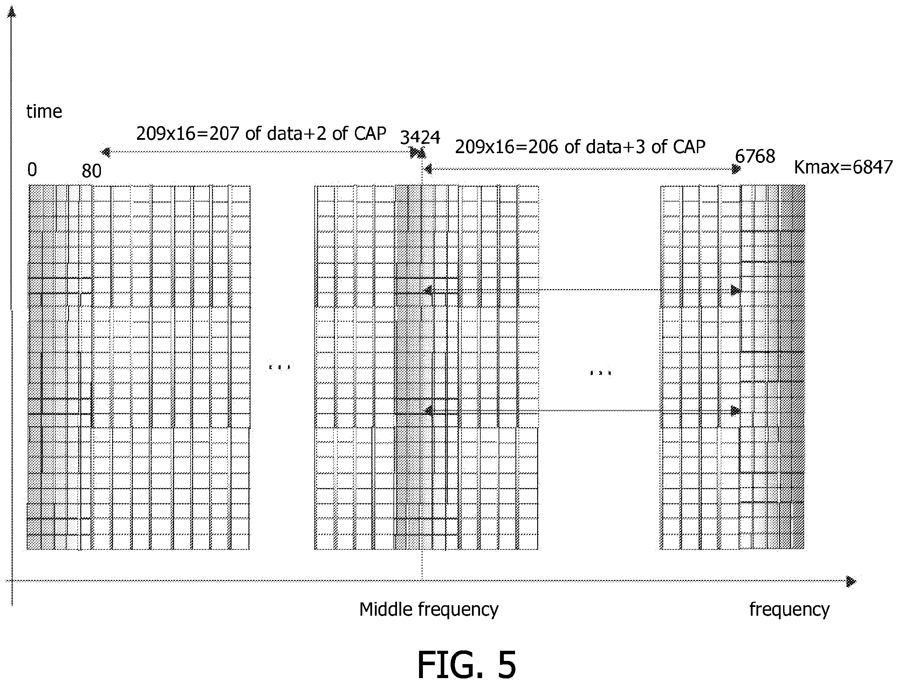

In Fig. 5, we depict the overall distributed pilot proposal including the SP and the CAP, with the pilot presence represented by some colored rectangles. We also include the number of sub-carriers and the exact location of the pilot within the available sub-carriers. In the proposed scheme there are $K_{max,2}$ + 1 = 6848 available sub-carriers. The SP occupies 6848/16=428 sub-carriers, the CAP occupies 15 $\times$ 5 $\times$ 3 = 225 sub-carries. The overall pilot overhead per OFDM symbol is 653 sub-carries. The proposed distributed pilot scheme can provide a completely new channel estimation every two OFDM symbols making the system robust with respect to channel variation.

The proposed distributed pilot scheme as compared to the pilot scheme of DVB-T offers a new trade-off between spectral efficiency and robustness to mobility. The distributed pilot scheme can halve the number of required pilots per OFDM symbol or, equivalently, make the system working at twice the user velocity with the same spectral efficiency. The trade-off can also be made in-between these two extremes.

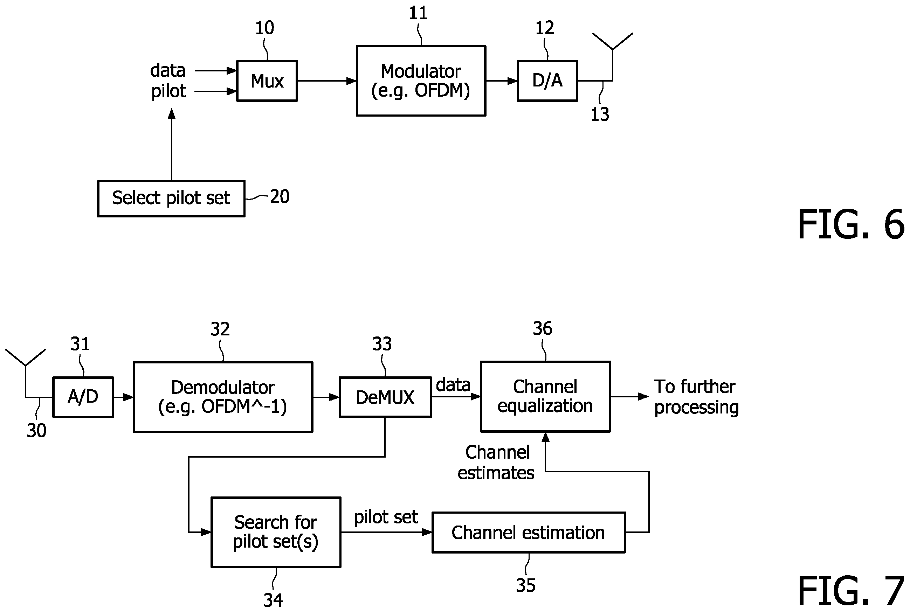

A block diagram of an embodiment of a transmitter according to the present invention is shown in Fig. 6. In this embodiment the transmitter includes a multiplexer 10 for multiplexing transmission data and pilot data into a multiplexed signal, a modulator 11 (e.g. an OFDM modulator) for modulating the multiplexed signal into the transmission signal, a D/A converter 12 for D/A converting said transmission signal, and an antenna for transmission of said D/A converted transmission signal. The pilot sequence of pilot data for multiplexing with the transmission data is selected by a control unit 20 (e.g. a central unit of the SFN) or by some unit of a higher layer of the network.

Fig. 7 shows an embodiment of a receiver according to the present invention. In this embodiment the receiver comprises an antenna 30 for receiving a transmission signal transmitted by one or more transmitters in the transmission area, an A/D converter 31 for A/D conversion of the received transmission signal, a demodulator 32 (e.g. an OFDM demodulator) for demodulating the A/D converted transmission signal into a demodulated signal, a demultiplexer 33 for demultiplexing the demodulated signal into pilot data and the transmission data, a pilot searching unit 34 for identifying a pilot sequence in said pilot data from a number of different pilot sequences used by different transmitters, a channel estimator 35 for separately estimating the channels from the one or more transmitters based on the found pilot sequence and a channel equalization unit 36 for channel equalization and combination of all separately estimated channels to the overall channel.

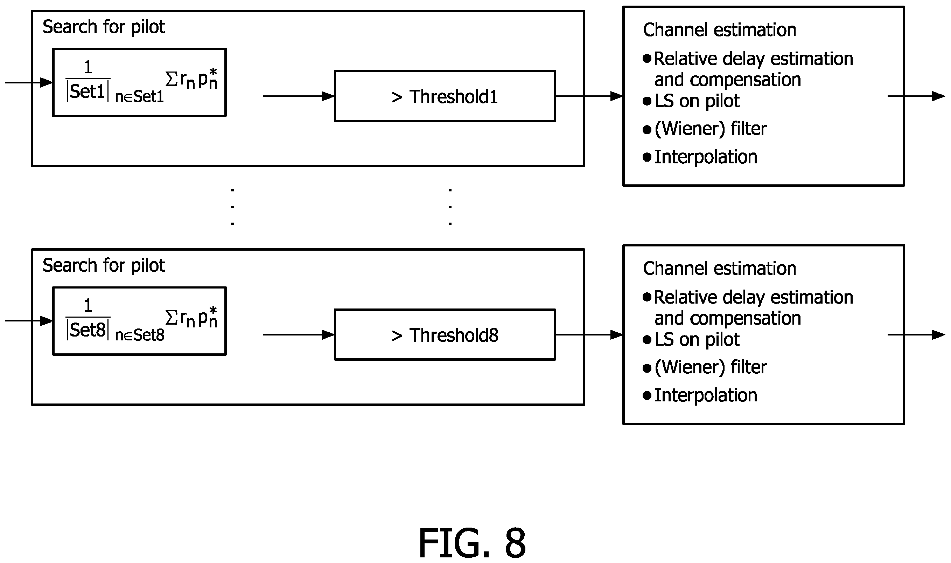

Fig. 8 shows an embodiment of the pilot searching unit 34 and the channel estimation unit 35 of a receiver according to the present invention in more detail. The pilot searching unit 34 comprises a number of pilot searching sub-units (here two pilot searching sub-units, generally there can be as many pilot searching sub-units as there are transmitters available in the transmission area). Each pilot searching sub-unit is adapted for searching for a particular pilot sequence in the pilot data demultiplexed from the received transmission data and includes an energy detector and a comparison with a threshold. The energy detector multiplies the signal received on the pilot sub-carriers with the complex conjugated known pilot symbols, it extracts the absolute square value and then average the result over all the pilot sub-carriers. The outcome is an estimate of the energy of the channel received from a single transmitter. The detected energy value is then compared with a threshold. If the detected energy is higher than the threshold, the receiver assumes that the signal is received from that transmitter, and proceeds with the channel estimation. If the detected energy is lower than the threshold, the receiver assumes that no signal has been transmitted from that receiver and does not proceed with the channel estimation.

The channel estimator 35 also comprises the same number of channel estimator sub-units for separate channel estimation of the respective channel using a least square (LS) on the pilot data, a filter and an interpolation. Optionally, the channel estimator sub-units perform an estimation and compensation of the relative delay tauD. The the estimation of the delay tauD of each channel with respect to the time synchronization of the OFDM signalcan be done by implementing equation (1) to (3). After estimating the relative delay tauD, the channel estimation unit first de-rotate the LS channel estimates received in the pilot position by multiplying them by exp(j2$\pi$ nF tauD_{frac}) where nF indicates the pilot sub-carrier frequencies. The initial rotation might only use the fractional part of the delay tauD. The channel estimation unit might also improve the quality of the LS channel estimation by some form of filtering, e.g. Wiener filter. The channel estimation unit interpolates the channel estimated on pilot sub-carrier to obtain the channel estimate on all sub-carriers. The interpolation might be a linear interpolation. The obtained channel frequency response is then rotated back by multiplying all the sub-carriers by exp(-j2$\pi$ nF tauD).

The proposed scheme, as compared to the DVB-T pilot structure has the following advantages

- it has a slightly reduced overhead, 1/16 as compared with 1/12;
- it is twice as robust to mobility, since the pilot structure repeats itself every two OFDM symbols and not every four OFDM symbols as in DVB-T;
- it is more robust to the combination of SFN and mobility if the SFN scenario matches the described one.

Other embodiments of the present invention include slightly different pilot structures, as shown in Fig. 3, where, for instance, the pilot sub-carriers are in different locations in the odd and even symbols or where the blocks of CAP are in different locations and size.. In the proposed scheme, the orthogonality is achieved by transmitting zeros in the sub-carriers where other transmitters are transmitting their pilots.

Another embodiment of this invention provides other forms of orthogonality by assigning orthogonal pilot sequences in time and frequency which allow for a simultaneous transmission of pilots in the same sub-carriers. This later approach would require some additional receiver effort, for instance, to separate the orthogonal pilot sequence.

Another embodiments of this invention provides other way of estimating the relative delay tauD*(i)* as, for instance, by correlating in the time domain with the time doamin version of the CAP sequence of a single transmitter to detect the position of each of the single channels. The proper cyclic rotation might also be applied before making the Fourier transform.

In a practical implementation the assignment of pilot sequences to the transmitters can be made by a software program controlled by an operator, wherein the assignment can be modified to optimize the coverage area. The pilot sequence to be used might come from a signalling from higher layers or as a control signal from a central unit of the network.

The invention can be applied to the DVB-T2 project, in particular as a possible new alternative pilot structure for the next generation digital terrestrial broadcast standard.

According to the present invention the above described problem with long channels in a simulcast broadcast network, where the same data symbols are transmitted at the same time from several sites (transmitters) can be solved by applying a different orthogonal pilot sequence for each site, such that the need to estimate all long channels is alleviated, leading to particular pilot structures.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

**Claims**

1. Single frequency network comprising:

     a plurality of transmitters (Tx1-Tx3) in a transmission area for simultaneously transmitting a transmission signal carrying the same transmission data using the same frequency channel for reception by one or more receivers (Rx) located in said transmission area, said transmitters comprising a multiplexing unit (10) for multiplexing said transmission data and pilot data into a multiplexed signal and a modulation unit (11) for modulating the multiplexed signal into said transmission signal, and **characterized by**
     a pilot determination unit for determining said pilot data, said pilot determination unit being adapted for determining, for each transmitter located farther away than a predetermined distance from other transmitters in said transmission area, a different pilot sequence of pilot data for multiplexing with the transmission data.

**2.** Single frequency network as claimed in claim 1,
wherein said pilot determination unit is adapted for determining for said transmitters in said transmission area pilot sequences, which are orthogonal to each other.

**3.** Single frequency network as claimed in claim 1,
wherein said modulation unit is adapted for OFDM modulating the multiplexed signal into OFDM symbols of said transmission signal, each OFDM symbol comprising a number of sub-carriers.

**4.** Single frequency network as claimed in claim 3,
wherein said pilot determination unit is adapted for determining said different pilot sequences such that pilot sub-carriers are inserted into said OFDM symbols at a spacing of n sub-carriers, n being an integer larger than 1, in particular equal to or larger than 8, wherein said pilot sub-carriers are inserted at different positions into said OFDM symbols for different pilot sequences.

**5.** Single frequency network as claimed in claim 3,
wherein said pilot determination unit is adapted for determining said different pilot sequences such that pilot sub-carriers are inserted into a set of adjacent sub-carriers in said OFDM symbols at a spacing of n sub-carriers, n being an integer larger than 1, in particular equal to or larger than 3, wherein said pilot sub-carriers are inserted at different positions into said OFDM symbols for different pilot sequences.

**6.** Single frequency network as claimed in claim 3,
wherein said transmitters, in particular the multiplexing units thereof, are adapted for transmitting no transmission data or pilot data on sub-carriers, which are used as pilot sub-carriers by any other transmitter.

**7.** Single frequency network as claimed in claim 3,
wherein said transmitters are adapted for transmitting said pilot sequence in every m-th OFMD symbol, m being an integer equal to or larger than 1.

**8.** Single frequency network as claimed in claim 1,
wherein said predetermined distance is in the range from 7 to 10 km, in particular 9 km.

**9.** Transmitter for use in a single frequency network that comprises a plurality of transmitters in a transmission area for simultaneously transmitting a transmission signal carrying the same transmission data using the same frequency channel for reception by one or more receivers located in said transmission area, said transmitter comprising:

- a multiplexing unit (10) for multiplexing said transmission data and pilot data into a multiplexed signal, and
- a modulation unit (11) for modulating the multiplexed signal into said transmission signal,

**characterized by**, a pilot determination unit for determining said pilot data, said pilot determination unit being adapted for determining that a pilot sequence of the pilot data is different from pilot sequences of pilot data used by other transmitters located farther away than a predetermined distance from other transmitters in said transmission area for multiplexing with the transmission data.

**10.** Transmission method for simultaneously transmitting, in a single frequency network that comprises a plurality of transmitters in a transmission area for transmitting a transmission signal carrying the same transmission data using the same frequency channel for reception by one or more receivers located in said transmission area, said transmission method comprising the steps of:

- multiplexing said transmission data and pilot data into a multiplexed signal, and
- modulating the multiplexed signal into said transmission signal,

**characterized in that** a pilot sequence of the pilot data is different from pilot sequences of pilot data used by other transmitters located farther away than a predetermined distance from other transmitters in said transmission area for multiplexing with the transmission data.

**11.** Receiver for use in a single frequency network that comprises a plurality of transmitters in a transmission area for simultaneously transmitting a transmission signal carrying the same transmission data using the same frequency channel for reception by one or more receivers located in said transmission area, said receiver comprising:

- a demodulation unit (32) for demodulating a received transmission signal into a demodulated signal, and
- a demultiplexing unit (33) for demultiplexing said demodulated signal into pilot data and said transmission data, **characterized by**
- a pilot searching unit (34) for identifying a pilot sequence in said pilot data from a number of different pilot sequences used by different transmitters located farther away than a predetermined distance from other transmitters in said transmission area, and
- a channel estimation unit (35) for separately estimating the channels from the one or more transmitters based on the found pilot sequence.

12. Receiver as claimed in claim 11,
in which the channel estimation unit (35) includes means for

- the estimation of the relative delay of each of the propagation channel
- the compensation for the fractional part of the relative delay on the channel estimates in the pilot sub-carriers
- the estimation of each individual propagation channel as if it were perfectly synchronized to the OFDM timing synchronization
- the re-introduction of the complete relative delay for each individual channel estimate.

13. Receiver as claimed in claim 11,
further comprising a channel equalization unit (36) for estimating the overall channel based on the separately estimated channels from the one or more transmitters.

14. Receiving method for use in a single frequency network that comprises a plurality of transmitters in a transmission area for simultaneously transmitting a transmission signal carrying the same transmission data using the same frequency channel for reception by one or more receivers located in said transmission area, said receiving method comprising the steps of:

- demodulating a received transmission signal into a demodulated signal, and
- demultiplexing said demodulated signal into pilot data and said transmission data, **characterized by**
- identifying a pilot sequence in said pilot data from a number of different pilot sequences used by different transmitters located farther away than a predetermined distance from other transmitters in said transmission area, and
- separately estimating the channels from the one or more transmitters based on the found pilot sequence.

**Patentansprüche**

1. Gleichwellennetz, bestehend aus:

mehreren räumlich über ein Sendegebiet verteilten Sendeanlagen (Tx1-Tx3), welche synchron zueinander und unter Nutzung derselben Sendefrequenzen identische Sendedaten ausstrahlen, wobei sie den gleichen Frequenzkanal für den Empfang durch einen oder mehrerer Empfänger (Rx) benutzen, die sich im besagten Sendegebiet befinden, und die besagte Sendeanlage umfasst einen Multiplexer (10) für das Multiplexing der besagten Sendedaten und Pilotdaten in ein gemultiplextes Signal, ferner umfassend eine Modulationseinheit (11) für die Modulation der gemultiplexten Signale im besagten Sendesignal, und ferner umfassend
eine Pilotbestimmungseinheit für die Bestimmung besagter Pilotdaten, welche so ausgelegt ist, dass sie für jede Sendeanlage, die sich weiter entfernt als eine vorgegebene Distanz von anderen Sendeanlagen im besagten Sendegebiet befindet, eine andere Pilotsequenz von Pilotdaten für das Multiplexing der Sendedaten ermittelt.

2. Gleichwellennetz nach Anspruch 1,
**dadurch gekennzeichnet, dass** die besagte Pilotbestimmungseinheit so ausgelegt ist, dass sie Pilotfrequenzen für die besagten Sendeanlagen im besagten Sendegebiet ermitteln kann, die orthogonal zueinander sind.

3. Gleichwellennetz nach Anspruch 1,
**dadurch gekennzeichnet, dass** besagte Modulationseinheit für ein orthogonales Frequenzmultiplexverfahren (OFDM) des Multiplexsignals in OFDM-Symbole des besagten Sendesignals ausgelegt ist, wobei jedes OFDM-Symbol aus einer Anzahl von Zwischenträgern besteht.

4. Gleichwellennetz nach Anspruch 3,
**dadurch gekennzeichnet, dass** besagte Pilotbestimmungseinheit so ausgelegt ist, dass sie verschiedene Pilotsequenzen dergestalt ermitteln kann, dass Pilotzwischenträger in besagte OFDM-Symbole in einem Abstand von n zwischen den Zwischenträgern eingefügt werden, wobei n eine ganze Zahl größer 1 ist und insbesondere gleich oder größer als 8 ist, und die besagten Pilotzwischenträger an verschiedenen Positionen der besagten OFDM-Symbole für unterschiedliche Pilotsequenzen eingefügt werden.

5. Gleichwellennetz nach Anspruch 3,
**dadurch gekennzeichnet, dass** besagte Pilotbestimmungseinheit so ausgelegt ist, dass sie die besagten Pilotsequenzen dergestalt ermitteln kann, dass Pilotzwischenträger in einen Satz von benachbarten Zwischenträgern in besagte OFDM-Symbole in einem Abstand von n zwischen den Zwischenträgern eingefügt werden, wobei n eine ganze Zahl größer 1 ist und insbesondere gleich oder größer als 3 ist, und die besagten Pilotzwischenträger an verschiedenen Positionen der besagten OFDM-Symbole für unterschiedliche Pilotsequenzen eingefügt werden.

6. Gleichwellennetz nach Anspruch 3,
**dadurch gekennzeichnet, dass** besagte Sendeanlagen, insbesondere die Multiplexer, so ausgelegt sind, dass sie keine Sendedaten oder Pilotdaten auf Zwischenträger übertragen, wenn diese Zwischenträger als Pilotzwischenträger von anderen Sendeanlagen genutzt werden.

7. Gleichwellennetz nach Anspruch 3,
**dadurch gekennzeichnet, dass** besagte Sendeanlagen so ausgelegt sind, dass sie die besagte Pilotsequenz in jedem m-ten OFMD-Symbol übertragen, wobei m eine ganze Zahl gleich oder größer 1 ist.

8. Gleichwellennetz nach Anspruch 1,
**dadurch gekennzeichnet, dass** die besagte vorgegebene Distanz in einem Bereich zwischen 7 und 10 km liegt, insbesondere 9 km.

9. Sendeanlage zur Nutzung in einem Gleichwellennetz, das aus mehreren räumlich über ein Sendegebiet verteilten Sendeanlagen besteht, die synchron zueinander und unter Nutzung derselben Sendefrequenzen identische Sendedaten ausstrahlen und den gleichen Frequenzkanal für den Empfang durch einen oder mehrerer Empfangsanlagen nutzen, die sich im besagten Sendegebiet befinden, wobei die besagte Sendeanlage Folgendes umfasst:

   - einen Multiplexer (10) für das Multiplexing besagter Sendedaten und Pilotdaten in einem Multiplex-Signal, und
   - eine Modulationseinheit (11) für die Modulation des gemultiplexten Signals im besagten Sendesignal,

**gekennzeichnet durch** eine Pilotbestimmungseinheit zur Bestimmung besagter Pilotdaten, wobei die besagte Pilotbestimmungseinheit so ausgelegt ist, dass sie eine Pilotsequenz der Pilotdaten ermitteln kann, die sich von Pilotsequenzen der Pilotdaten unterscheidet, die von anderen Sendeanlagen für das Multiplexing von Sendedaten eingesetzt werden, wenn diese Sendeanlagen weiter entfernt als eine vorgegebene Distanz von anderen Sendeanlagen im besagten Sendegebiet sind.

10. Sendeverfahren für das gleichzeitige Senden in einem Gleichwellennetz, welches aus mehreren räumlich über ein Sendegebiet verteilten Sendeanlagen besteht, die synchron zueinander und unter Nutzung derselben Sendefrequenzen identische Sendedaten ausstrahlen und den gleichen Frequenzkanal für den Empfang durch einen oder mehrerer Empfangsanlagen nutzen, die sich im besagten Sendegebiet befinden, wobei das besagte Sendeverfahren die folgenden Schritte umfasst:

   - Multiplexing besagter Sendedaten und Pilotdaten in einem gemultiplexten Signal, und
   - Modulation des gemultiplexten Signals in das besagte Sendesignal, wobei eine Pilotsequenz der Pilotdaten sich von Pilotsequenzen der Pilotdaten unterscheidet, die von anderen Sendeanlagen für das Multiplexing von Sendedaten eingesetzt werden, wenn sich die Sendeanlagen weiter entfernt als eine vorgegebene Distanz von anderen Sendeanlagen im besagten Sendegebiet befinden.

11. Empfangsanlage zur Nutzung in einem Gleichwellennetz, welches aus mehreren räumlich über ein Sendegebiet verteilten Sendeanlagen besteht, die synchron zueinander und unter Nutzung derselben Sendefrequenzen identische Sendedaten ausstrahlen und den gleichen Frequenzkanal für den Empfang durch einen oder mehrerer Empfangsanlagen benutzen, die sich im besagten Sendegebiet befinden, wobei die besagte Empfangsanlage Folgendes umfasst:

- eine Demodulationseinheit (32) für die Demodulation eines eingegangenen Sendesignals in ein demoduliertes Signal, und

- eine Demultiplexing-Einheit (33) für das Demultiplexing des besagten demodulierten Signals in Pilotdaten und besagte Sendedaten, wobei eine Pilotsucheinheit (34) eine Pilotsequenz in Pilotdaten aus einer Reihe von verschiedenen Pilotsequenzen ermitteln kann, die von verschiedenen Sendeanlagen eingesetzt werden, sich weiter entfernt als eine vorgegebene Distanz von anderen Sendeanlagen im besagten Sendegebiet befinden; und

- eine Kanalschätzungseinheit (35), die dem gesonderten Schätzen der Kanäle von einer oder mehrerer Sendeanlagen anhand der gefundenen Pilotsequenz dient.

12. Empfangseinheit nach Anspruch 11,
**dadurch gekennzeichnet, dass** die Kanalschätzungseinheit (35) Vorrichtungen umfasst,

- welche die relative Verzögerung der einzelnen Übertragungskanäle schätzt, und
- eine Kompensation für den Bruchteil der relativen Verzögerung der Kanalschätzungen in den Pilotzwischenträgern durchführen kann, und
- eine Schätzung für jeden einzelnen Ausbreitungskanal so durchführen kann, als ob diese perfekt mit der OFDM-Zeitsynchronisation synchronisiert wurden, und
- die vollständige relative Verzögerung für jede einzelne Kanalschätzung neu einführen kann.

13. Empfangseinheit nach Anspruch 11,
ferner bestehend aus einem Kanal-Equalizer (36) für die Schätzung des gesamten Kanals anhand der getrennt geschätzten Kanäle von einer Sendeanlage oder mehreren Sendeanlagen.

14. Empfangsverfahren zur Nutzung in einem Gleichwellennetz, welches aus mehreren räumlich über ein Sendegebiet verteilten Sendeanlagen besteht, die synchron zueinander und unter Nutzung derselben Sendefrequenzen gleichzeitig identische Sendedaten ausstrahlen und den gleichen Frequenzkanal für den Empfang durch einen oder mehrerer Empfangsanlagen nutzen, die sich im besagten Sendegebiet befinden, **dadurch gekennzeichnet, dass** das besagte Empfangsverfahren die folgenden Schritte umfasst:

- Demodulation eines eingegangenen Sendesignals in ein demoduliertes Signal, und
- Demultiplexen des besagten demodulierten Signals in Pilotdaten und besagte Sendedaten, **gekennzeichnet durch**
- das Ermitteln einer Pilotsequenz in besagten Pilotdaten aus einer Reihe verschiedener Pilotsequenzen, die von Sendeanlagen eingesetzt werden, welche sich weiter entfernt als eine vorgegebene Distanz von anderen Sendeanlagen im besagten Sendegebiet befinden, und
- das gesonderte Schätzen der Kanäle von einer oder mehrerer Sendeanlagen anhand der gefundenen Pilotsequenz.

**Revendications**

1. Réseau à fréquence unique comprenant :

un ensemble d'émetteurs (Tx1-Tx3) situés dans une zone de transmission pour permettre de transmettre simultanément un signal de transmission renfermant les mêmes données de transmission en utilisant le même canal de fréquences pour permettre sa réception par au moins un récepteur (Rx) situé dans la zone de transmission, les émetteurs comprenant une unité de multiplexage (10) permettant de multiplexer les données de transmission et des données pilotes en un signal multiplexé et une unité de modulation (11) permettant de moduler le signal multiplexé en un signal de transmission, **caractérisé par**
une unité de détermination de pilote permettant de déterminer les données pilotes, l'unité de détermination pilote étant susceptible de déterminer, pour chacun des émetteurs situés à une distance supérieure à une distance prédéfinie d'autres émetteurs situés dans la zone de transmission une séquence pilote différente de données pilotes à multiplexer avec les données de transmission.

2. Réseau à fréquence unique conforme à la revendication 1,
dans lequel l'unité de détermination pilote est susceptible de déterminer pour les émetteurs situés dans la zone de transmission des séquences pilotes qui sont orthogonales.

**3.** Réseau à fréquence unique conforme à la revendication 1,
selon lequel l'unité de modulation est susceptible d'effectuer une modulation OFDM du signal multiplexé en des symboles OFDM du signal de transmission, chacun des symboles OFDM comprenant plusieurs sous-porteuses.

**4.** Réseau à fréquence unique conforme à la revendication 3,
dans lequel l'unité de détermination pilote est susceptible de déterminer les séquences pilotes différentes de sorte que des sous-porteuses pilotes soient insérées dans les symboles OFDM avec un espacement de n sous-porteuses, n étant un nombre entier supérieur à 1, en particulier égal ou supérieur à 8, et les sous-porteuses pilotes étant insérées dans des positions différentes dans les symboles OFDM pour différentes séquences pilotes.

**5.** Réseau à fréquence unique conforme à la revendication 3,
dans lequel l'unité de détermination pilote est susceptible de déterminer les séquences pilotes différentes de sorte que des sous-porteuses pilotes soient insérées dans un jeu de sous-porteuses adjacentes dans les symboles OFDM avec un espacement de n sous-porteuses, n étant un nombre entier supérieur à 1, en particulier égal ou supérieur à 3, et les sous-porteuses pilotes étant insérées dans des positions différentes dans les symboles OFDM pour des séquences pilotes différentes.

**6.** Réseau à fréquence unique conforme à la revendication 3,
dans lequel les émetteurs, en particulier leurs unités de multiplexage sont susceptibles de ne pas transmettre de données de transmission ou de données pilotes sur des sous-porteuses qui sont utilisées comme sous-porteuses pilotes un autre émetteur quelconque.

**7.** Réseau à fréquence unique conforme à la revendication 3,
dans lequel les émetteurs sont susceptibles de transmettre la séquence pilote dans chacun des énièmes symboles OFMD, m étant un nombre entier égal ou supérieur à 1.

**8.** Réseau à fréquence unique conforme à la revendication 1,
dans lequel la distance prédéfinie est située dans la plage de 7 à 10 km et est en particulier égale à 9 km.

**9.** Emetteur destiné à être utilisé dans un réseau à fréquence unique comprenant un ensemble d'émetteurs situés dans une zone de transmission pour permettre de transmettre simultanément un signal de transmission renfermant les mêmes données de transmission en utilisant le même canal de fréquences pour permettre sa réception par au moins un récepteur situé dans la zone de transmission, cet émetteur comprenant :

    - une unité de multiplexage (10) permettant de multiplexer les données de transmission et des données pilotes en un signal multiplexé, et
    - une unité de modulation (11) permettant de moduler le signal multiplexé en un signal de transmission,

**caractérisé par** une unité de détermination pilote permettant de déterminer les données pilotes, cette unité de détermination pilote étant susceptible de déterminer qu'une séquence pilote des données pilote est différente de séquences pilotes de données pilotes utilisées par d'autres émetteurs situés à une distance supérieure à une distance prédéfinie d'autres émetteurs situés dans la zone de transmission à multiplexer avec les données de transmission.

**10.** Procédé de transmission simultanée, dans un réseau à fréquence unique qui comprend un ensemble d'émetteurs situés dans une zone de transmission pour permettre de transmettre un signal de transmission renfermant les mêmes données de transmission en utilisant le même canal de fréquences pour permettre sa réception par au moins un récepteur situé dans la zone de transmission, ce procédé comprenant des étapes consistant à :

    - multiplexer les données de transmission et des données pilotes en un signal multiplexé, et
    - moduler le signal multiplexé en un signal de transmission,

**caractérisé en ce qu'**une séquence pilote des données pilotes est différente de séquences pilotes de données pilotes utilisées par d'autres émetteurs situés à une distance supérieure à une distance prédéfinie d'autres émetteurs situés dans la zone de transmission à multiplexer avec les données de transmission.

**11.** Récepteur destiné à être utilisé dans un réseau à fréquence unique comprenant un ensemble d'émetteurs situés dans une zone de transmission pour permettre de transmettre simultanément un signal de transmission renfermant les mêmes données de transmission en utilisant le même canal de fréquences pour permettre sa réception par au moins un récepteur situé dans la zone de transmission, ce récepteur comprenant :

- une unité de démodulation (32) permettant de démoduler un signal de transmission reçu en un signal démodulé, et
- une unité de démultiplexage (33) permettant de démultiplexer le signal démodulé en des données pilotes et des données de transmission, **caractérisé par** :

  - une unité de recherche pilote (34) permettant d'identifier une séquence pilote dans les données pilotes parmi plusieurs séquences pilotes différentes utilisées par différents émetteurs situés à une distance supérieure à une distance prédéfinie d'autres émetteurs situés dans la zone de transmission, et
  - une unité d'évaluation de canal (35) permettant d'évaluer séparément les canaux provenant du ou des émetteur(s) sur le fondement de la séquence pilote trouvée.

**12.** Récepteur conforme à la revendication 11,
dans lequel l'unité d'évaluation de canal (35) comporte des moyens pour permettre :

  - l'évaluation du retard relatif de chacun des canaux de propagation,
  - la compensation de la partie fractionnelle du retard relatif sur les évaluations de canal dans les sous-porteuses pilotes,
  - l'évaluation de chaque canal de propagation individuel comme s'il avait été parfaitement synchronisé avec la synchronisation d'horloge OFDM,
  - la réintroduction du retard relatif établi pour chaque évaluation de canal individuel.

**13.** Récepteur conforme à la revendication 11,
comprenant en outre une unité d'égalisation de canal (36) permettant d'évaluer le canal global sur le fondement des canaux évalués séparément provenant du ou des émetteur(s).

**14.** Procédé de réception destiné à être utilisé dans un réseau à fréquence unique qui comprend un ensemble d'émetteurs situés dans une zone de transmission pour permettre de transmettre simultanément un signal de transmission renfermant les mêmes données de transmission en utilisant le même canal de fréquences pour permettre sa réception par au moins un récepteur situé dans la zone de transmission, ce procédé de réception comprenant des étapes consistant à :

- démoduler un signal de transmission reçu en un signal démodulé, et
- démultiplexer le signal démodulé en des données pilotes et les données de transmission, **caractérisé par** des étapes consistant à :

  - identifier une séquence pilote dans les données pilotes parmi plusieurs séquences pilotes différentes utilisées par différents émetteurs situés à une distance supérieure à une distance prédéfinie d'autres émetteurs situés dans la zone de transmission, et
  - évaluer séparément les canaux provenant du ou des émetteur(s) sur le fondement de la séquence pilote trouvée.

FIG. 1

FIG. 2

FIG. 3

FIG. 4

EP 2 143 243 B1

FIG. 5

FIG. 6

FIG. 7

EP 2 143 243 B1

Search for pilot

$$\frac{1}{|Set1|}\sum_{n\in Set1} r_n p_n^*$$

$> \text{Threshold1}$

Channel estimation
- Relative delay estimation and compensation
- LS on pilot
- (Wiener) filter
- Interpolation

Search for pilot

$$\frac{1}{|Set8|}\sum_{n\in Set8} r_n p_n^*$$

$> \text{Threshold8}$

Channel estimation
- Relative delay estimation and compensation
- LS on pilot
- (Wiener) filter
- Interpolation

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004184399 A
- US 2006291577 A
- US 2006209973 A
- US 7145959 B2
- WO 9914871 A

**Non-patent literature cited in the description**

- **S.M. ALAMOUTI.** A simple transmit diversity technique for wireless communications. *IEEE J. Sel. Areas. Comm.,* October 1998, vol. 16, 1451-1458